# EUROPÄISCHE PATENTSCHRIFT

(11) **EP 2 060 443 B1**
(45) Veröffentlichungstag und Bekanntmachung des Hinweises auf die Patenterteilung: **10.08.2016**
(21) Anmeldenummer: 08169127.1
(22) Anmeldetag: 14.11.2008
(51) Int. Cl.: B60Q 3/04

(54) **Hinterleuchtete perforierte Verbundschicht**
Back-lit perforated compound layer
Couche composite perforée rétroélcairée

(30) Priorität: 14.11.2007 DE 102007054348
(43) Veröffentlichungstag der Anmeldung: 20.05.2009
(73) Patentinhaber: Lisa Dräxlmaier GmbH, 84137 Vilsbiburg (DE)
(72) Erfinder: Schlemmer, Christian, 84034 Landshut (DE)
(74) Vertreter: Hoffmann Eitle

(56) Entgegenhaltungen:
- EP-A- 0 688 701
- WO-A-2004/024510
- WO-A-2005/009795
- WO-A-2007/028565
- DE-A1- 2 049 034
- DE-A1-102004 010 974
- DE-A1-102006 016 068
- FR-A- 2 872 953
- GB-A- 2 418 170
- US-A1- 2002 101 738

## Beschreibung

### GEBIET DER ERFINDUNG

Die vorliegende Erfindung betrifft eine Interieurkomponente für ein Fahrzeug aus einer perforierten Verbundschicht und einer Lichtquelle

### BESCHREIBUNG DES STANDES DER TECHNIK

Hinterleuchtete Knöpfe, Schalter und andere Bedienelemente sind bekannt. Solche Elemente werden unter anderem im Fahrzeugbau eingesetzt, um Funktionselemente in Bauteilen, wie beispielsweise der Mittelkonsole, der Türinnenverkleidung oder der Instrumententafel visuell hervorzuheben. Häufig bilden solche Funktionselemente separate Einheiten, die, auch wenn sie sich in einem nicht hinterleuchteten Zustand befinden, als separate Elemente erkennbar sind und somit die Homogenität bzw. Gleichförmigkeit einer Oberfläche stören können.

Gleichzeitig findet sich in modernen Fahrzeugen immer häufiger eine so genannte Ambiente-Beleuchtung. Dabei wird über in oder angrenzend an Interieurbauteilen angeordneten Lichtquellen und evtl. zusätzlich einer gezielten indirekten Beleuchtung von Interieurbauteilen das Wohlbefinden der Insassen eines Fahrzeugs durch eine derart gestaltete Ambientebeleuchtung bei fehlendem Tageslicht gesteigert.

Um Oberflächen, die in einem unbehandelten Zustand kein oder nur wenig Licht durchlassen, zu hinterleuchten, beschreibt die US 2004/0017687 A1 eine perforierte hinterleuchtete Oberfläche und ein Verfahren zur Herstellung derselben. Hierbei werden in die Dekorschicht, beispielsweise Leder, Öffnungen eingebracht, und es wird eine Lichtquelle aus Sicht eines Fahrgastes so hinter dem Leder angeordnet, dass von der Lichtquelle ausgesandtes Licht durch die eingebrachten Öffnungen in den Fahrgastinnenraum scheint. Allerdings sind die eingebrachten Öffnungen auch im nicht hinterleuchteten Fall sichtbar, so dass sie den Eindruck einer homogenen Dekoroberfläche stören können. Ferner lassen sich die visuellen Eigenschaften der hinterleuchteten perforierten Bereiche nur stark eingeschränkt verändern und schwer an vielfältige Kundenanforderungen anpassen.

Die DE 10 2006 016 068 A1 beschreibt eine Beleuchtungskomponente für den Innenraum eines Fahrzeugs, mit einer Dekormaterialschicht, in das in erste transluzente Bereiche ein Beleuchtungsmaterial eingebracht ist, das einen vergleichsweise großen Kontrast zu einem zweiten nicht transluzenten Bereich bildet. Dekoroberflächen mit Beleuchtung für Fahrzeuginnenräume sind auch aus der GB 2 418 170 A, der WO 2007/028565 A1, der WO 2004/024510 A1, der EP 0 688 701 A1, der DE 10 2004 010 974 A1, der FR 2 872 953 A1, der WO 2005/009795 A. Eine gattungsgemäße Interieurkomponente ist aus der US 2002/0101738 A1 bekannt.

### ZUSAMMENFASSUNG DER ERFINDUNG

Es ist daher Aufgabe der Erfindung eine Interieurkomponente aus perforierter Verbundschicht und Lichtquelle anzugeben, deren sichtbare Dekoroberfläche im Falle der Nichthinterleuchtung nahezu homogen erscheint und im Falle der Hinterleuchtung verbesserte und flexibel anpassbare visuelle Eigenschaften aufweist.

"Homogen" ist im vorliegenden Fall so zu verstehen, dass die perforierte Oberfläche für einen Fahrgast in einem üblichen Abstand von einem nicht perforierten Bereich derselben Oberfläche kaum zu unterscheiden ist, d.h. dass insbesondere diejenigen Öffnungen, die Teil der vorliegenden Erfindung sind, kaum zu erkennen sind. Es sei darauf hingewiesen, dass die Oberfläche durchaus sichtbare Öffnungen und/oder andere sichtbare Modifikationen enthalten kann, wenn dies gewünscht ist. Eine "perforierte" Schicht soll eine Schicht mit mehreren Öffnungen bezeichnen, wobei ausdrücklich darauf hingewiesen wird, dass eine solche Öffnung die Schicht nicht vollständig durchlaufen muss. Öffnungen, die nur bis zu einer gewissen Tiefe eingebracht sind, sollen auch unter den Begriff der "Perforation" fallen.

Die Aufgabe der vorliegenden Erfindung wird mit dem Gegenstand des Anspruchs 1 gelöst. Vorteilhafte Ausgestaltungen folgen aus den jeweiligen Unteransprüchen. Danach weist eine Interieurkomponente für ein Fahrzeug eine Verbundschicht mit einer Dekorschicht, die eine Vielzahl von Öffnungen umfasst, und eine transparente Schicht auf, wobei auf der der transparenten Schicht abgewandten Seite der Dekorschicht eine Lichtquelle vorgesehen ist, wobei in wenigstens einige der Öffnungen ein Licht beeinflussendes Material eingebracht ist und/oder wenigstens einige Öffnungen die Dekorschicht nur teilweise durchlaufen. Das Licht beeinflussende Material zeichnet sich dadurch aus, dass es eine zumindest messbare Veränderung der Durchleuchtungseigenschaften, verglichen mit einer Dekorschicht, in der die Öffnungen nicht oder lediglich mit Luft gefüllt sind, aufweist. Eine Nachbehandlung der Öffnungen mittels eines solchen Licht beeinflussenden Materials ist in vielerlei Hinsicht vorteilhaft. Zum einen kann das Material eine Färbung und/oder Struktur aufweisen, welche die eingebrachten Öffnungen optisch versteckt, zum anderen kann dieses Material die Eigenschaften des ausgestrahlten Lichts verändern, beispielsweise die Färbung, die Intensität, die Streuung usw. Außerdem können einzelne Öffnungen oder verschiedene Bereiche der Perforation unterschiedliche optische Eigenschaften aufweisen. Die Interieurkomponente ist so ausgebildet, dass die perforierte Oberfläche für einen Fahrgast in einem üblichen Abstand und bei fehlender Hinterleuchtung von einem nicht perforierten Bereich derselben Oberfläche kaum zu unterscheiden ist.

Auf ein Einbringen einer zusätzlichen Substanz in die Öffnungen kann möglicherweise verzichtet werden, wenn die Dekorschicht oder die Verbundschicht mit der Dekorschicht bereits die Anlage des gewünschten visuellen Eindrucks bei einer Hinterleuchtung aufweist, aber keine Ausreichende Lichtintensität durchlässt. In diesem Fall kann ein Einbringen von Öffnungen mit einer gewissen Tiefe in die üblicherweise stark absorbierende Dekorschicht genügen, um für eine ausreichende Lichtintensität auf der dem Fahrzeuginnenraum zugewandten Seite der Verbundschicht zu sorgen und ohne zusätzliches Licht beeinflussendes Material den gewünschten visuellen Effekt erzielen. In diesem Falle kann die strukturelle Festigkeit der Dekoroberfläche besser aufrechterhalten werden.

Die Tiefe der Öffnungen ist ein Parameter, um Lichteigenschaften, wie Farbe, Intensität und dergleichen des durchscheinenden Lichts zu beeinflussen. Insbesondere bieten sich Öffnungen mit einer gewissen Tiefe an, um die Stabilität bzw. Strukturfestigkeit der Dekorschicht und Verarbeitbarkeit zu wahren, eine Hinterleuchtung bzw. Durchleuchtung zu ermöglichen und gleichzeitig die sichtbare Dekoroberfläche mechanisch nicht zu beeinflussen. Unter Stabilität der Dekorschicht ist insbesondere die strukturelle Festigkeit und Elastizität zu verstehen.

Um zu verhindern, dass Schmutzablagerungen, Feuchtigkeit oder dergleichen in Öffnungen oder Teile der Öffnungen eindringen, ist eine transparente Schicht vorgesehen. Diese transparente Schicht kann ferner hinsichtlich einer visuellen Erscheinung der Dekoroberfläche im beleuchteten und unbeleuchteten Zustand optimiert werden. Insbesondere kann die flächig aufgebrachte transparente Schicht optische Eigenschaften aufweisen, die für alle Bereiche der Perforation gelten sollen.

Der Öffnungsdurchmesser ist 0,02 mm bis 0,5 mm, bevorzugt etwa 0,1 mm. Der Öffnungsdurchmesser soll so gewählt sein, dass ein guter Kompromiss aus Lichtdurchlässigkeit der Dekorschicht, Homogenität der Dekoroberfläche und Stabilität der Dekorschicht erreicht wird. Da die Verarbeitungslinien für nicht perforierte Dekorschichten optimiert sind, ist es wichtig, dass die Perforation das Verarbeitungsverhalten der Schicht möglichst wenig verändert. Der obige Öffnungsdurchmesser trägt dazu bei, dass sich die physikalischen strukturellen Eigenschaften, insbesondere die Verarbeitbarkeit, durch die Perforation wenig ändern. Es zeigt sich ferner, dass bei Oberflächen, wie etwa Leder, Öffnungen mit einem Öffnungsdurchmesser von 0,1 mm für einen Fahrgast in einem normalen Abstand kaum zu erkennen sind.

Der Öffnungsabstand ist 0,1 mm bis 0,7 mm, bevorzugt 0,3 mm. Für die oben genannten Eigenschaften (Durchlässigkeit, Homogenität, Stabilität) ist neben dem Öffnungsdurchmesser auch die Anzahl der Öffnungen, die pro Oberflächeneinheit eingebracht sind, wesentlich. Hinsichtlich einer Optimierung der Homogenität der Dekoroberfläche sind vorzugsweise viele kleine Öffnungen pro Oberflächeneinheit als wenige große Öffnungen vorzusehen. Gleichzeitig soll die Verarbeitbarkeit der Dekorschicht gewahrt bleiben, so dass sie sich beispielsweise bei einer Weiterverarbeitung im Bereich der Perforationen nicht verzieht. Die obigen Bereichsangaben tragen dazu bei, einen guten Kompromiss aus Durchlässigkeit, Homogenität und Stabilität zu bilden.

Vorzugsweise ist die Lichtquelle Teil der Verbundschicht, um den Platzbedarf der Interieurkomponente zu optimieren und eine Weiterverarbeitung zu vereinfachen. Die Lichtquelle kann hierbei eine Leuchtfolie sein.

Vorzugsweise erfolgt die Anordnung der Öffnungen so, dass beim Durchscheinen der Verbundschicht mit Licht der Lichtquelle, ein Symbol, beispielsweise ein Pfeil, sichtbar ist. Besonders in der Ausgestaltung eines Fahrzeuginnenraums wird ein optimaler Kompromiss aus hochwertigen, homogenen und klar strukturierten Oberflächen verschiedener Elemente, wie beispielsweise Instrumententafel und Türinnenverkleidung, und einer Darstellung von Informationen, beispielsweise den Fahrzeugzustand betreffend, angestrebt. Bestimmte Informationen anzeigende Elemente oder Bereiche sollen daher nur sichtbar sein, wenn die Informationen dem Fahrzeuginsassen angezeigt werden sollen. Andernfalls sollen sie verborgen sein. Üblicherweise werden Informationen über Symbole, wie beispielsweise Schriftzeichen, Zahlen und dergleichen, dargestellt, so dass das Verbergen solcher Symbole in dem Fall, in dem sie nicht angezeigt werden sollen, besonders wünschenswert ist. Durch die geringe Größe, den geringen Abstand und die hohe Anzahl der Öffnungen kann der optische Eindruck eines gleichmäßig beleuchteten Symbols vermittelt werden. Dieser Eindruck ist kaum vom Querschnitt der Öffnungen abhängig.

Für den Fall, dass durch erfindungsgemäße Öffnungen ein Teil einer Ambientebeleuchtung geschaffen werden sollen, werden die Öffnungen in den Bereichen einer Verbundschicht eines Elements, wie beispielsweise Instrumententafel oder Türinnenverkleidung, eingebracht, die bei fehlendem Tageslicht beleuchtet werden können. Bei Tageslicht sind die erfindungsgemäßen Öffnungen nicht sichtbar. Damit ergibt sich erstmals die Möglichkeit eine unabhängig von der bei Tageslicht sichtbaren Kontur der Elemente eine Ambientebeleuchtung zu realisieren. Durch die geringe Größe, den geringen Abstand und die hohe Anzahl der Öffnungen kann der optische Eindruck einer gleichmäßig beleuchteten Fläche vermittelt werden.

Vorzugsweise wird die Verbundschicht in einem der folgenden Bauteile verwendet: Dachhimmel, Lenkrad, Türinnenverkleidung, Dekoroberfläche, Mittelkonsole, Instrumententafel.

Vorzugsweise weist die Verbundschicht zusätzlich eine Trägerschicht auf, die auf der Seite der Lichtquelle der Verbundschicht vorgesehen ist. Die Trägerschicht kann beispielsweise ein Abstandsgewirke oder einen formstabilen Träger umfassen, um die weiterverarbeitbarkeit der Verbundschicht zu vereinfachen, die Stabilität der Verbundschicht zu verbessern oder um die Lichtquelle aufzunehmen.

Vorzugsweise weist die Verbundschicht zusätzlich eine Imprägnierschicht auf, die an der Rückseite (aus Sicht des Fahrgastes) der Verbundschicht vorgesehen sein kann. Diese Imprägnierschicht kann Füllstoffe, wie z.B. Hohlglaskugeln, umfassen.

Vorzugsweise sind die transparente Schicht, das Licht beeinflussende Material und die Imprägnierschicht transparent. "Transparent" ist hierbei so zu verstehen, dass wenigstens ein beträchtlicher Teil des einfallenden Lichtes, auch Laserlicht durchgelassen wird. Wenn die Imprägnierschicht auf der Dekor abgewandten Seite aufgebracht wird, durchscheint das Licht wenigstens drei Schichten, die jeweils Eigenschaften des Lichts, wie Farbe, Intensität, Streuverhalten usw. beeinflussen können. Durch eine solche Kombination ist eine gewünschte visuelle Wirkung des in das Fahrzeuginnere eintretenden Lichtes sehr gut steuerbar, sowohl für einzelne Perforationsabschnitte, als auch für den Bereich der gesamten Perforation. Ferner werden die Dekorschicht und die Perforation von beiden Seiten gegenüber äußeren Einflüssen, wie Feuchtigkeit oder Schmutz geschützt.

Vorzugsweise weist die transparente Schicht, das Licht beeinflussende Material und/oder die Imprägnierschicht Licht streuende Eigenschaften auf, um eine diffuse Wirkung des hinterleuchteten perforierten Verbunds zu erreichen. Insbesondere kann somit gewährleistet werden, dass die Hinterleuchtung in einem großen Blickwinkelbereich gut erkennbar ist.

Vorzugsweise ist die transparente Schicht, das Licht beeinflussende Material oder die Imprägnierschicht eine Licht leitende und/oder Licht fördernde Schicht. Licht leitend, bzw. Licht fördernd bedeutet in diesem Zusammenhang, dass Licht in einem beträchtlichen Maße entlang der Schicht geleitet wird. Eine solche Eigenschaft trägt dazu bei, dass für den Betrachter auch im Fall relativ großer Öffnungsabstände nicht nur einzelne durchleuchtete Punkte sichtbar sind, sondern der Eindruck einer gleichmäßig leuchtenden Oberfläche entsteht. Besonders im Falle von Dekoroberflächen, in denen ein minimaler Öffnungsabstand aufgrund von Materialeigenschaften nicht unterschritten werden sollte, sind Licht leitende bzw. Licht fördernde Schichten vorteilhaft.

Vorzugsweise dienen eine oder mehrere Schichten der Verbundschicht auch als Haftvermittler. Eine solche Doppelfunktion hilft das Herstellungsverfahren einer solchen Verbundschicht zu optimieren und Kosten und Gewicht zu reduzieren.

Die Dekorschicht besteht aus Leder. In Fahrzeugen der Oberklasse wird Leder als Dekorschicht im Innenraum häufig verwendet. Um Leder als Dekorschicht verarbeiten zu können, weist es eine Mindeststärke auf, die ein Durchleuchten ohne Einbringen von Öffnungen nicht ermöglicht. Die vorliegende Erfindung ist daher gerade für Dekoroberflächen dieses Typs relevant. Ferner wird von einer Lederoberfläche nicht erwartet, dass sie aktiv Licht aussendet. Eine scheinbar "selbstleuchtende" Lederoberfläche ist somit innovativ. Das Leder kann durch Schärfen, Spalten und/oder andere Verfahren vorbehandelt sein.

Vorzugsweise handelt es sich bei dem Leder um ein vorbehandeltes, genarbtes Naturleder mit einer auf der Dekorseite angeordneten transparenten Schicht. Bei der transparenten Schicht kann es sich um eine mit einem transparenten Bindemittel (z.B. Polyurethan) auf das Leder aufgebrachte Farbpigmentierung handeln. Die Dicke einer derartigen Schicht beträgt üblicherweise 0,02 bis 1 mm. Derartige Leder sind als Nappaleder bekannt.

Die Dicke der Dekorschicht ist 0,15 mm bis 0,75 mm, noch bevorzugter 0,25 mm. Sowohl für die Verarbeitbarkeit der Dekorschicht, als auch für die Durchlässigkeit spielt die Dicke der Dekorschicht eine entscheidende Rolle. Die obigen Bereichsangaben tragen dazu bei, einen guten Kompromiss aus Durchlässigkeit und Stabilität, insbesondere für Leder, Kunstleder oder lederartige Dekoroberflächen, zu bilden.

Vorzugsweise ist die Lichtquelle eine LED, eine Leuchtfolie, beispielsweise eine OLED-Folie, oder ein Leuchtlack. Da die Lichtquelle nahe an der Verbundschicht angeordnet ist, sollte die Lichtquelle eine sog. kalte Lichtquelle sein. Aus Gründen einer verbesserten Raumausnutzung und eines verbesserten Gewichts bieten sich die obigen Lichtquellen an.

Vorzugsweise sind mehrere Lichtquellen vorgesehen, wobei jede Öffnung einer oder mehreren Lichtquellen zugeordnet ist, so dass die Verbundschicht als Monitor fungieren kann. Zur Herstellung eines "solchen unsichtbaren Monitors" bietet sich eine OLED-Folie an. Ein so hergestellter Monitor ist aus folgenden Gründen vorteilhaft: zunächst einmal können verschiedene Informationen, wie beispielsweise Symbole, Schriften, bewegte Bilder und veränderliche Informationen usw. durch einen einzigen Perforationsbereich angezeigt werden. Ferner können die Intensität, die Farbe und andere Eigenschaften des durchscheinenden Lichts elektronisch, beispielsweise mittels einer Recheneinheit, gesteuert werden. Eine solche Anordnung ist daher flexibel einsetzbar und muss nicht für einen bestimmten Einsatzzweck entworfen werden. Sie kann in einem späten Stadium programmiert werden.

Vorzugsweise ist ein Schalter vorgesehen, der seinen Zustand ändert, wenn eine Kraft auf einen Teil der Dekorschicht, vorzugsweise auf den perforierten Bereich, aufgebracht wird. Um eine Verbindung von einer reinen Informationsdarstellung hin zu einer Kombination aus Informationsdarstellung und Funktionselement herzustellen, kann ein Schalter vorgesehen sein. Dieser Schalter kann beispielsweise ein Piezoschaltelement, ein mechanischer Schalter oder ein elektromagnetischer Schalter sein. Die Informationsdarstellung und der Zustand des Schalters können, müssen aber nicht, gekoppelt sein. Als ein Beispiel seien hier die Anzeige und der Schalter einer Warnblinkanlage genannt, die durch Drücken eines beleuchteten Warnblinkanlagensymbols aktiviert wird, woraufhin die permanente Hinterleuchtung in eine blinkende Hinterleuchtung geändert wird.

Vorzugsweise durchlaufen mehrere Öffnungen die Dekorschicht vollständig. Für bestimmte Dekorschichten kann es notwendig sein, dass Öffnungen der Perforation die Dekorschicht vollständig durchlaufen, da anderenfalls keine ausreichende Durchleuchtung erzielt werden kann. Ferner ist das Herstellen vollständig durchlaufender Öffnungen einfacher als ein Einbringen von Öffnungen gezielter Tiefe.

Vorzugsweise weisen mehrere Öffnungen unterschiedliche Tiefen auf oder dringen in unterschiedliche Schichten ein, um so die Intensität, Farbe oder andere Eigenschaften des durchscheinenden Lichts zu beeinflussen.

Die Dekorschicht ist im Bereich der Perforation geschwächt, um durch die geringere Dicke der Dekorschicht im Bereich der Perforation die Intensität des durchscheinenden Lichts zu erhöhen. Zusätzlich vereinfacht eine geringe Dicke der Dekorschicht auch die Erzeugung der Öffnungen. Die Oberfläche der Dekorschicht kann ferner bearbeitet, beispielsweise teilweise abgetragen, überlackiert oder pigmentiert, sein.

Vorzugsweise umfasst die Trägerschicht ferner einen formstabilen Träger, der an der Lichtquellenseite der Verbundschicht vorgesehen ist, um eine verbesserte Weiterverarbeitbarkeit des Verbunds sicherzustellen, sodass die Dekorschicht bei einer Weiterverarbeitung nicht verzogen oder auf andere Weise beschädigt wird. Gegebenenfalls können die Öffnungen auch in dem formstabilen Träger vorgesehen sein, so dass die Hinterleuchtung hinter dem formstabilen Träger angebracht werden kann. Vorzugsweise weist der formstabile Träger in dem Bereich der Hinterleuchtung eine Aussparung auf, um darin wenigstens einen Teil der Beleuchtungseinrichtung aufzunehmen und somit für eine bessere Raumausnutzung zu sorgen.

Vorzugsweise überlappen sich die Öffnungen zumindest teilweise, um beispielsweise einen linienförmigen Spalt auszubilden. Ein solches Überlappen von Öffnungen ist dann vorteilhaft, wenn die Austrittsöffnungen des Lichts modelliert werden sollen. Dabei muss die gewonnene Austrittsöffnung nicht linienförmig sein, sondern kann beliebige Flächenformen annehmen. In dem Fall, in dem das Überlappen der Öffnungen die Verarbeitbarkeit der Dekorschicht unerwünscht verändert, weil die Öffnungen beispielsweise einen Mindestabstand unterschreiten, kann die Stabilität der Schicht durch das Einbringen eines geeigneten Materials in die Öffnungen verbessert oder wieder hergestellt werden.

Vorzugsweise sind wenigstens zwei Lichtquellen so vorhanden, dass ein Farb- und/oder Intensitätsumschlag des durchscheinenden Lichts ermöglicht wird, um somit verschiedene Zustände eines Schalters, des Fahrzeugs oder dergleichen anzuzeigen.

Vorzugsweise sind die Öffnungen mit einer Leuchtsubstanz besprüht oder gefüllt. Das Vorsehen einer Leuchtsubstanz kann insbesondere dann sinnvoll sein, wenn die Interieurkomponente mit einem Schalter verbunden ist, der auch bei Dunkelheit und in einem Zustand der Nichthinterleuchtung erkennbar sein soll.

Das Einbringen einer Leuchtsubstanz in die Öffnungen trägt dabei, insbesondere bei einer Vielzahl von Öffnungen, zu einer zusätzlichen mechanischen Stabilisierung der Dekorschicht bei. Bei einer Leuchtsubstanz handelt es sich dabei um Stoffe die durch Anregung sichtbares Licht erzeugen, wie beispielsweise durch Fluoreszenz, Phosphoreszenz, o.ä..

Die Interieurkomponente aus perforierter Verbundschicht und Lichtquelle kann durch ein Verfahren, welches die folgenden Schritte umfasst, hergestellt werden:
a) Herstellen einer Verbundschicht, die eine Dekorschicht und eine transparente Schicht umfasst;
b) nach Herstellen der Verbundschicht, Ausbilden einer Vielzahl von Öffnungen in die Dekorschicht;
c) Anordnen einer Lichtquelle auf einer Seite der Öffnungen, so dass Licht der Lichtquelle durch die Öffnungen scheinen kann. Das Verfahren ist unter anderem vorteilhaft, da es eine obige Interieurkomponente herstellt. Durch das Einbringen der Öffnungen in die Verbundschicht wird einer Qualitätsminderung entgegengewirkt, die bei einer Herstellung einer Verbundschicht mit einer bereits perforierten Dekorschicht aufgrund der durch die Perforation hervorgerufenen Materialschwächung auftreten kann.

Vorzugsweise wird die Dekorschicht mittels eines Laserverfahrens perforiert. Durch die häufige und vielseitige Anwendung von Lasern ist ein solches Verfahren kostengünstig durchzuführen. Ferner erlauben Laserverfahren eine große Perforationsgenauigkeit. Eine solche Genauigkeit ist im vorliegenden Fall wünschenswert, da durch die Feinheit der Perforation eine hohe Genauigkeit verlangt wird und um ferner die Schwächung des Materials zu minimieren. Andere Perforationsverfahren, wie beispielsweise Wasser- /Fluidverfahren, sind denkbar.

Erfindungsgemäß handelt es sich bei der Dekorschicht um eine Lederschicht, die zumindest im Bereich der Perforation geschwächt ist. Eine geringe Schichtdicke der Dekorschicht reduziert die zur Einbringung der Perforation mit einem Laserverfahren erforderliche Leistung. Damit kann insbesondere die Schädigung von zu den Öffnungen benachbarten Bereichen vermieden und gleichzeitig eine vorteilhaft hohe Bearbeitungsgeschwindigkeit gewählt werden.

Vorzugsweise wird in einem zusätzlichen Schritt der Bereich der Perforation gereinigt. Durch die Perforation und/oder durch andere Verfahrensschritte können Restpartikel, Staub oder andere Verunreinigungen den Perforationsbereich der Verbundschicht verschmutzen. Insbesondere können Teilchen in die geschaffenen Öffnungen eindringen oder während der Herstellung der Öffnung nicht ausreichend entfernt werden, so dass ein Reinigungsschritt die gewünschte Reinheit der Verbundschicht herstellen kann.

Vorzugsweise erfolgt die Reinigung durch Beblasen mit einem Gas, Besprühen oder Waschen mit einer Flüssigkeit und/oder Aufbringen und Abziehen einer Klebesubstanz oder eines Klebestreifens. Das geeignete Verfahren zur Reinigung des perforierten Bereichs der Verbundschicht richtet sich unter anderem nach der gewünschten Reinheit und den zu bearbeitenden Materialien.

Vorzugsweise wird bei der Herstellung der Verbundschicht eine Trägerschicht hinzugefügt, die auf der Lichtquellenseite der Dekorschicht vorgesehen ist.

Vorzugsweise wird bei der Herstellung der Verbundschicht eine Imprägnierschicht mit Füllstoffen hinzugefügt.

Vorzugsweise werden mehrere Lichtquellen vorgesehen, wobei jede Öffnung einer oder mehrer Lichtquellen zugeordnet wird, so dass die Verbundschicht als Monitor fungieren kann.

Vorzugsweise wird in einem weiteren Schritt ein Schalter hinzugefügt, der seinen Zustand ändert, wenn eine Kraft auf einen Teil der Dekorschicht, vorzugsweise auf den perforierten Bereich, aufgebracht wird.

Erfindungsgemäß wird in wenigstens eine Öffnung ein Lichtbeeinflussendes Material eingebracht.

Erfindungsgemäß wird in einem weiteren Schritt die Dekorschicht im Bereich der Perforation geschwächt.

Vorzugsweise wird bei der Herstellung der Verbundschicht ein formstabiler Träger, der an der Lichtquellenseite der Verbundschicht vorgesehen ist, hinzugefügt.

Vorzugsweise werden wenigstens zwei Lichtquellen so angeordnet, dass ein Farb- und/oder Intensitätsumschlag des durchscheinenden Lichts ermöglicht wird.

Vorzugsweise werden die Öffnungen mit einer Leuchtsubstanz besprüht oder befüllt.

Vorzugsweise werden die Öffnungen in die vorgefertigte Verbundschicht so eingebracht, dass mehrere Öffnungen in mehrere Schichten eindringen oder unterschiedliche Tiefen aufweisen.

### KURZE BESCHREIBUNG DER ZEICHNUNGEN

Fig. 1, 2 und 3a zeigen ein erfindungsgemäßes Ausführungsbeispiel und Fig. 3b, 3c, 4 und 5 zeigen nichterfindungsgemäße Ausführungen.
- Fig. 1: zeigt eine hinterleuchtete Lederschicht;
- Fig. 2: zeigt schematisch den Querschnitt der aus Fig. 1 hinterleuchteten Verbundschicht (Verbundschicht auch oben);
- Fig. 3a: zeigt den Querschnitt einer Verbundschicht gemäß einer weiteren Ausführungsform der Erfindung;
- Fig. 3b und c: zeigen Beispiele des Querschnitts der Verbundschicht;
- Fig. 4: zeigt ein Beispiel des Querschnitts einer Verbundschicht, in der die Öffnungen mit einer Leuchtsubstanz besprüht/befüllt sind;
- Fig. 5: zeigt ein weiteres Beispiel einer Verbundschicht.

### WEGE ZUR AUSFÜHRUNG DER ERFINDUNG

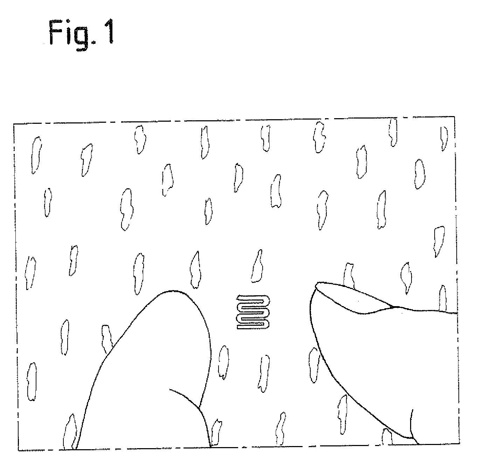

In Fig. 1 ist eine hinterleuchtete Verbundschicht gezeigt, wie sie einem Betrachter beispielsweise in einem Fahrzeuginnenraum erscheinen kann. Als Dekorschicht wurde hier Leder verwendet. Aufgrund des geringen Durchmessers der Öffnungen sind einzelne Öffnungen der Perforation nicht zu erkennen, und es entsteht der Eindruck eines nahezu gleichmäßig (homogen) leuchtenden Symbols.

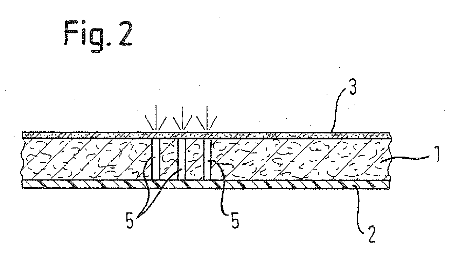

Fig. 2 zeigt eine Ausführungsform des Querschnitts einer solchen Verbundschicht, wobei Referenzzeichen 1 eine perforierte Dekorschicht, im vorliegenden Fall Leder, Referenzzeichen 2 ein Leuchtmittel und Referenzzeichen 3 einen transparenten Lack bezeichnet.

Es wird zunächst ein Verbund aus der Dekorschicht 1 und dem Transparenten Lack 3 hergestellt. Danach werden Öffnungen 5 in die Dekorschicht 1 eingebracht. A1 Perforationsverfahren kommt hierbei Wasserstrahlen oder Lasern zum Einsatz.

Der Durchmesser der Öffnungen 5 beträgt 0,02 bis 0,5 mm. Im vorliegenden Fall wird ein schärfgespaltenes Leder mit einer

Dicke von 0,15 bis 0,75 mm verwendet. In dieser Ausführungsform ist die Lichtquelle eine Leuchtfolie 2, die raumsparend als eine Schicht auf der dem transparenten Lack 3 abgewandten Seite auf der Dekorschicht 1 aufgebracht ist. Der transparente Lack 3 sorgt für einen Schutz der Lederschicht 1, außerdem dafür, dass Schmutzteilchen oder dergleichen nicht in die Öffnungen 5 von der Fahrgastseite eindringen können und zum anderen für eine Streuwirkung des austretenden Lichts, um ein homogenes Erscheinungsbild der Beleuchtung zu verbessern.

Obwohl es aus der Schnittansicht der Fig. 2 nicht hervorgeht, sind die Öffnungen 5 vorzugsweise in Symbolform, beispielsweise in einer Pfeilform, angeordnet. Eine Verbundschicht, wie sie hier dargestellt ist, kann modular weiterverwendet werden. Sie ist flexibel genug, um über eine Instrumententafel, über einen Träger oder beispielsweise einen Schalter gezogen zu werden. Auf der anderen Seite sorgt der Verbund aus Lackschicht 3 und Dekorschicht 1 für eine ausreichende Stabilität auch im Bereich der Perforation, so dass eine fehlerfreie Weiterverarbeitung des Verbunds gewährleistet ist.

Die Laserperforierung kann verfahrenstechnisch so eingestellt werden, dass einzelne Bohrungen erzeugt werden können, die durch einen Steg getrennt werden, oder die Bohrungen überlappend erzeugt werden, so dass beispielsweise Linien dargestellt werden können.

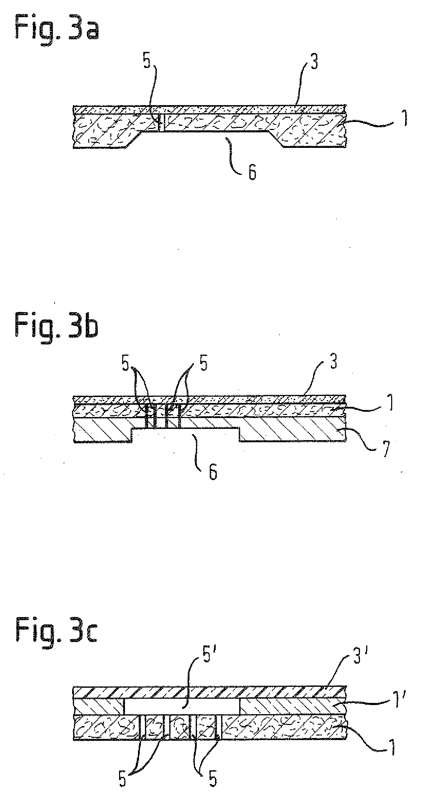

Fig. 3a, 3b und 3c zeigen verschiedene Verbundschichten, wie sie im Zusammenhang mit einer Lichtquelle verwendet werden können. In Fig. 3a ist erfindungsgemäß eine Lederschicht 1 im Bereich der Perforation geschwächt. Eine Schwächung (Aussparung) 6 dieser Art gewährleistet eine ausreichende Intensität der Beleuchtung an der Dekoroberfläche und vereinfacht das Einbringen von Öffnungen. Ferner wird dadurch die Raumausnutzung optimiert, da eine Leuchteinheit in den ausgesparten Bereich wenigstens teilweise eingebracht werden kann.

Es ist eine transparente Schicht 3 auf der Dekorseite, d. h. der für den Betrachter sichtbaren Seite, aufgebracht, um eine Verbundschicht aus der im Bereich der Perforation geschwächten Lederschicht 1 und der transparenten Schicht herzustellen. Es sei ausdrücklich darauf hingewiesen, dass es vorteilhaft ist, erst nach dem Aufbringen der transparenten Schicht 3 auf die unperforierte Dekorschicht 1 diese zu perforieren. Das ist aus verfahrenstechnischer Sicht sinnvoll, wenn eine Bearbeitungslinie für einen Schichtverbund bereits existiert, der für unperforierte Schichten vorgesehen ist. Aus dem gleichen Grund kann es sinnvoll sein, die Schwächung 6 des Perforationsbereichs nach der Verbundherstellung herzustellen.

Fig. 3b zeigt einen Verbund mit einem formstabilen Träger 7, einer Lederschicht 1 und einer transparenten Schicht 3.
Der formstabile Träger 7 kann die Weiterverarbeitung, beispielsweise als Modul, des Verbundes vereinfachen. Der Träger kann ein Trägergitter sein. Ein solches Trägergitter kann vorperforiert sein. Ferner ist der formstabile Träger 7 im Bereich der Perforation geschwächt. Die Laserbearbeitung eines Gesamtverbundes kann also über einen vorgeschwächten formstabilen Träger 7 (Teildurchbruch wird beispielsweise Werkzeug fallend oder durch Schneideverfahren erzeugt) erfolgen.

Fig. 3c zeigt einen Verbund mit einer Lederschicht 1, die eine auf der Dekorseite angeordnete erste transparente Schicht 1' aufweist. Bei dem Leder handelt es sich z.B. um Nappaleder und bei der ersten transparenten Schicht um ein mit einem transparentem Bindemittel auf das Leder aufgebrachte Farbpigmentierung. Zusätzlich befindet sich oberhalb der Lederschicht eine transparente Folienschicht 3'. Die Öffnungen 5 der Perforierung werden mit einem Laserverfahren von der der Folienschicht 3' abgewandten Seite der Lederschicht eingebracht und durchdringen die Lederschicht nur teilweise. Vorzugsweise enden die Öffnungen im Bereich der transparenten Schicht 1'. In einem zweiten Arbeitsschritt wird von der Sichtseite des Dekorverbunds eine weitere Öffnung 5' eingebracht. Diese Öffnung 5' weist einen größeren Durchmesser als die Öffnungen 5 auf und kann auch mehrere der Öffnungen 5 miteinander verbinden. Die derart erzeugten Öffnungen könnten in einem nicht dargestellten Folgeschritt mit einem Licht beeinflussendem Material gefüllt werden.

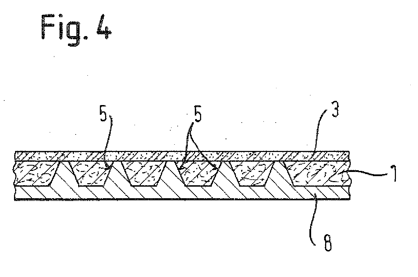

Fig. 4 zeigt einen Querschnitt einer Verbundschicht, in der das Referenzzeichen 1 ein perforiertes Leder, Referenzzeichen 3 eine transparente Schicht und Referenzzeichen 8 eine Leuchtschicht bezeichnet. Die Leuchtschicht 8 wird durch Aufsprühen einer Leuchtsubstanz gebildet, welche in die Öffnungen 5 der Lederschicht eindringt und diese zumindest zum Teil ausfüllt. Das Aufsprühen oder Aufbringen einer die Öffnungen 5 wenigstens zum Teil befüllenden Schicht, ist nicht auf eine Leuchtsubstanz begrenzt, sondern kann ein beliebiges Licht beeinflussendes Material sein. Das Licht beeinflussende Material zeichnet sich dadurch aus, dass es eine zumindest messbare Veränderung der Durchleuchtungseigenschaften, verglichen mit einer Dekorschicht, in der die Öffnungen nicht oder lediglich mit Luft gefüllt sind, aufweist.

In einer weiteren Ausführungsform, die in den Figuren nicht gezeigt ist, wird ein Mikroperforationsfeld in einer Dekorschicht erzeugt, das aus einer Vielzahl von kleinen Öffnungen besteht, die rechteckförmig angeordnet sind, so dass eine Lochmaske in das Leder eingebracht wird. Ein solches Mikroperforationsfeld kann beispielsweise an einem Kopfpolster in einem Kfz vorgesehen sein, um mit Hilfe einer geeigneten Hinterleuchtung einen "unsichtbaren Monitor" auszubilden. Die Hinterleuchtung kann hierbei mittels einer OLED-Folie vorgesehen sein, die über eine Recheneinheit steuerbar ist. Die Auflösung dieses Monitors wird dabei durch den Lochabstand bestimmt. Es kann hierbei eine geeignete Licht leitende Schicht als transparente Schicht auf der Dekorseite des Leders aufgebracht sein, um einen Verwaschungseffekt zwischen den Öffnungen zu verstärken. Ein geeignetes Spaltgeschärftes, perforiertes Leder weist hierbei eine Dicke von 0,25 mm, einen Öffnungsabstand von 0,5 mm und einen Öffnungsdurchmesser von 0,1 mm auf.

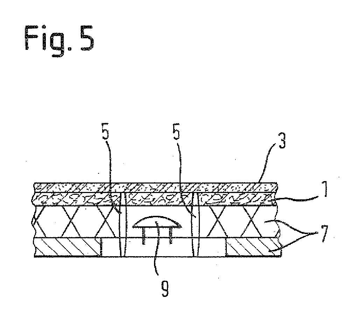

Fig. 5 zeigt eine Verbundschicht mit einer LED 9, die als eine Trägerschicht 7 ein funktionalisiertes Abstandsgewirke und einen formstabilen Träger aufweist, in das die LED 9 eingesteckt ist. Ferner weist die Verbundschicht eine Dekorschicht 1, beispielsweise aus Leder oder Kunstleder, eine transparente Schicht 3 und eine Laserperforierungen 5 auf. Die Öffnungen werden nach der Verbundherstellung eingebracht und durchlaufen die Verbundschicht nicht vollständig. Im vorliegenden Fall wird zunächst ein Teilverbund aus dem formstabilem Träger, dem Abstandsgewirke und der Dekorschicht hergestellt. Dieser Teilverbund wird gelasert, um Durchgangslöcher in den Teilverbund einzubringen. Anschließend wird die Oberfläche mit einem transparenten Lack 3 versiegelt.

Der Einbau der/des Leuchtmittel/Leuchtmittels in einer einzelnen Materialschicht, in einen Teilverbund oder in einen Gesamtverbund kann vor oder nach der Laserbearbeitung erfolgen. Ein Teil- oder Gesamtverbund kann inklusive der Dekorschicht mit durchgehenden Öffnungen gelasert werden. Anschließend können die Öffnungen mit einer transparenten Beschichtung teilweise oder vollständig versiegelt werden.

## Patentansprüche

1. Interieurkomponente, die eine Verbundschicht mit einer Dekorschicht (1), die eine Vielzahl von Öffnungen (5) umfasst, und eine transparenten Schicht (3) aufweist, wobei eine Lichtquelle (2, 9) auf der der transparenten Schicht (3) abgewandten Seite der Dekorschicht (1) vorgesehen ist, wobei
in wenigstens einige Öffnungen (5) ein Licht beeinflussendes Material eingebracht ist und/oder wenigstens einige Öffnungen (5) die Dekorschicht (1) nur teilweise durchlaufen, wobei der Öffnungsdurchmesser 0,002 mm bis 0,5 mm, **dadurch gekennzeichnet, dass** der Öffnungsabstand 0,1 mm bis 0,7 mm beträgt und die Schichtdicke der Dekorschicht 0,15 mm bis 0,75 mm ist, wobei die Dekorschicht (1) aus Leder besteht und zumindest im Bereich der Öffnungen geschwächt ist, um eine geringere Schichtdicke zu erzeugen.

2. Interieurkomponente nach Anspruch 1, **dadurch gekennzeichnet, dass** die Lichtquelle (2, 9) Teil der Verbundschicht ist.

3. Interieurkomponente nach einem der vorhergehenden Ansprüche, **dadurch gekennzeichnet, dass** die Verbundschicht zusätzlich eine Trägerschicht (7) aufweist, die auf der Lichtquellenseite der Dekorschicht (1) vorgesehen ist, und/oder zusätzlich eine Imprägnierschicht umfasst.

4. Interieurkomponente nach Anspruch 3, **dadurch gekennzeichnet, dass** die transparente Schicht (3), das Lichtbeeinflussende Material und/oder die Imprägnierschicht transparent ist, vorzugsweise weisen die transparente Schicht (3), das Lichtbeeinflussende Material und/oder die Imprägnierschicht Licht streuende, Licht leitende, reflektierende und/oder Licht fördernde Eigenschaften auf.

5. Interieurkomponente nach einem der vorhergehenden Ansprüche, **dadurch gekennzeichnet, dass** der
Öffnungsdurchmesser etwa 0,1 mm ist, und/oder der Öffnungsabstand etwa 0,3 mm ist.

6. Interieurkomponente nach einem der vorhergehenden Ansprüche, **dadurch gekennzeichnet, dass** die Lichtquelle (2, 9) eine LED (9), eine Leuchtfolie (2), beispielsweise eine OLED-Folie, oder ein Leuchtlack ist.

7. Interieurkomponente nach einem der vorhergehenden Ansprüche, **dadurch gekennzeichnet, dass** mehrere Lichtquellen (2, 9) vorgesehen sind, wobei jede Öffnung (5) einer oder mehrer Lichtquellen zugeordnet ist, so dass die Verbundschicht als Monitor fungieren kann.

8. Interieurkomponente nach einem der vorhergehenden Ansprüche, **dadurch gekennzeichnet, dass** ferner ein Schalter vorgesehen ist, der seinen Zustand ändert, wenn eine Kraft auf einen Teil der Dekorschicht (1), vorzugsweise auf den perforierten Bereich, aufgebracht wird.

9. Interieurkomponente nach einem der vorhergehenden Ansprüche, **dadurch gekennzeichnet, dass** mehrere Öffnungen (5) die Dekorschicht (1) vollständig durchlaufen und/oder mehrere Öffnungen (5) unterschiedliche Tiefen aufweisen oder in unterschiedliche Schichten eindringen, um so die Intensität, Farbe oder andere Eigenschaften des durchscheinenden Lichts zu beeinflussen.

10. Interieurkomponente nach einem der vorhergehenden Ansprüche, ferner umfassend einen formstabilen Träger, der an der Lichtquellenseite der Verbundschicht vorgesehen ist.

11. Interieurkomponente nach einem der vorhergehenden Ansprüche, wobei die Öffnungen derart angeordnet sind, dass beim Durchscheinen der Verbundschicht mit Licht der Lichtquelle (2, 9) ein Symbol sichtbar ist.

12. Interieurkomponente nach einem der Ansprüche 1 bis 10, wobei die Öffnungen derart angeordnet sind, dass beim Durchscheinen der Verbundschicht mit Licht der Lichtquelle (2, 9) eine gleichmäßig beleuchtete Fläche sichtbar ist.

## Claims

1. Interior component which has a composite layer with a decorative layer (1), which comprises a plurality of openings (5), and a transparent layer (3), wherein a light source (2, 9) is provided on the side of the decorative layer (1) facing away from the transparent layer (3), wherein a light-influencing material is introduced into at least some openings (5) and/or at least some openings (5) only partly pass through the decorative layer (1), wherein the opening diameter is 0.002 mm to 0.5 mm, **characterised in that** the opening gap is 0.1 mm to 0.7 mm and the layer thickness of the decorative layer is 0.15 mm to 0.75 mm, wherein the decorative layer (1) consists of leather and is weakened at least in the region of the openings in order to produce a lower layer thickness.

2. Interior component according to claim 1, **characterised in that** the light source (2, 9) is part of the composite layer.

3. Interior component according to one of the preceding claims, **characterised in that** the composite layer additionally has a support layer (7) which is provided on the light source side of the decorative layer (1), and/or additionally comprises an impregnation layer.

4. Interior component according to claim 3, **characterised in that** the transparent layer (3), the light-influencing material and/or the impregnation layer is transparent, preferably the transparent layer (3), the light-influencing material and/or the impregnation layer have light-scattering, light-conducting, reflecting and/or light-promoting properties.

5. Interior component according to one of the preceding claims, **characterised in that** the opening diameter is about 0.1 mm, and/or the opening gap is about 0.3 mm.

6. Interior component according to one of the preceding claims, **characterised in that** the light source (2, 9) is an LED (9), a light sheet (2), for example an OLED sheet, or a light lacquer.

7. Interior component according to one of the preceding claims, **characterised in that** several light sources (2, 9) are provided, wherein each opening (5) is assigned to one or more light sources so that the composite layer may act as a monitor.

8. Interior component according to one of the preceding claims, **characterised in that** furthermore a switch is provided which changes its state when a force is applied to a part of the decorative layer (1), preferably to the perforated region.

9. Interior component according to one of the preceding claims, **characterised in that** several openings (5) pass completely through the decorative layer (1) and/or several openings (5) have different depths or penetrate into different layers in order to thus influence the intensity, colour or other properties of the light shining through.

10. Interior component according to one of the preceding claims, further comprising a dimensionally stable support which is provided on the light source side of the composite layer.

11. Interior component according to one of the preceding claims, wherein the openings are arranged such that a symbol is visible when shining light of the light source (2, 9) through the composite layer.

12. Interior component according to one of claims 1 to 10, wherein the openings are arranged such that a uniformly illuminated surface is visible when shining light of the light source (2, 9) through the composite layer.

## Revendications

1. Composant intérieur qui présente une couche composite avec une couche décorative (1) qui comporte une pluralité d'ouvertures (5), et une couche transparente (3), une source de lumière (2, 9) étant prévue du côté de la couche décorative (1) opposé à la couche transparente (3), dans lequel un matériau influençant la lumière est introduit
dans au moins quelques ouvertures (5) et/ou au moins quelques ouvertures (5) traversent la couche décorative (1) seulement en partie, le diamètre d'ouverture étant de 0,002 mm à 0,5 mm, **caractérisé en ce que** la distance des ouvertures est de 0,1 à 0,7 mm et l'épaisseur de la couche décorative est de de 0,15 à 0,75 mm, la couche décorative (1) se composant de cuir et étant affaiblie dans la zone des ouvertures par une épaisseur de couche moindre.

2. Composant intérieur selon la revendication 1, **caractérisé en ce que** la source de lumière (2, 9) fait partie de la couche composite.

3. Composant intérieur selon l'une quelconque des revendications précédentes, **caractérisé en ce que** la couche composite présente en outre une couche de support (7) qui est prévue du côté source de lumière de la couche décorative (1) et/ou comporte en outre une couche d'imprégnation.

4. Composant intérieur selon la revendication 3, **caractérisé en ce que** la couche transparente (3), le matériau influençant la lumière et/ou la couche d'imprégnation est ou sont transparents, de préférence la couche transparente (3), le matériau influençant la lumière et/ou la couche d'imprégnation présente(nt) des propriétés de diffusion, de conduction, de réflexion, et/ou de renfort de la lumière.

5. Composant intérieur selon l'une quelconque des revendications précédentes, **caractérisé en ce que** le diamètre des ouvertures est d'environ 0,1 mm et/ou la distance des ouvertures est d'environ 0,3 mm.

6. Composant intérieur selon l'une quelconque des revendications précédentes, **caractérisé en ce que** la source de lumière (2, 9) est une DEL (9), un film de lumière (2), par exemple un film DEL organique ou un vernis luminescent.

7. Composant intérieur selon l'une quelconque des revendications précédentes, **caractérisé en ce que** plusieurs sources de lumière (2, 9) sont prévues, chaque ouverture (5) étant associée à une ou plusieurs sources de lumière de sorte que la couche composite puisse fonctionner comme moniteur.

8. Composant intérieur selon l'une quelconque des revendications précédentes, **caractérisé en ce qu'**un commutateur est de plus prévu, lequel modifie son état lorsqu' une force est appliquée à une partie de la couche décorative (1), de préférence sur la zone perforée.

9. Composant intérieur selon l'une quelconque des revendications précédentes, **caractérisé en ce que** plusieurs ouvertures (5) traversent complètement la couche décorative (1) et/ou plusieurs ouvertures (5) présentant différentes profondeurs ou pénètrent dans différentes couches afin d'influencer l'intensité, la couleur ou d'autres propriétés de la lumière transparente.

10. Composant intérieur selon l'une quelconque des revendications précédentes, comportant de plus un support à forme stable qui est prévu du côté source de lumière de la couche composite.

11. Composant intérieur selon l'une quelconque des revendications précédentes, dans lequel les ouvertures sont ménagées de telle manière qu'un symbole soit visible lors du passage à travers la couche composite par de la lumière de la source de lumière (2, 9).

12. Composant intérieur selon l'une quelconque des revendications 1 à 10, dans lequel les ouvertures sont ménagées de telle manière que, lors du passage à travers la couche composite par de la lumière de la source de lumière (2, 9), une surface éclairée uniformément soit visible.
